(19) **Europäisches Patentamt**
**European Patent Office**
**Office européen des brevets**

(11) **EP 4 691 239 A1**

(12) **EUROPEAN PATENT APPLICATION**

(43) Date of publication:
**11.02.2026 Bulletin 2026/07**

(21) Application number: **25194867.5**

(22) Date of filing: **08.08.2025**

(51) International Patent Classification (IPC):
**A01N 33/12** (2006.01)  **A01P 7/04** (2006.01)
**A01N 43/90** (2006.01)  **A01N 65/36** (2009.01)

(52) Cooperative Patent Classification (CPC):
(C-Sets available)
**A01P 7/04; A01N 33/12**  (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.08.2024 EP 24306335**

(71) Applicant: **UPL Mauritius Limited**
**Port Louis (MU)**

(72) Inventors:
• **López, David Roldán**
**41728 Sevilla (ES)**

• **Sainz, Carlos**
**41728 Sevilla (ES)**
• **Serrano, Ricardo Márquez**
**41728 Sevilla (ES)**
• **Mulero, Antonio**
**41728 Sevilla (ES)**
• **Duarte, Ricardo Junqueira**
**13092-807 Campinas - SP (BR)**
• **Coudrin, Hélène**
**64150 Noguères (FR)**
• **Holzfuss, Constanze**
**50354 Hürth (DE)**

(74) Representative: **J A Kemp LLP**
**80 Turnmill Street**
**London EC1M 5QU (GB)**

(54) **AN INSECTICIDAL COMBINATION, COMPOSITION AND METHOD OF USING THE SAME**

(57) The present disclosure relates to an insecticidal combination. Particularly, the present disclosure relates to an insecticidal combination comprising a denatonium compound or a salt thereof and atleast one bio-insecticide. The present disclosure also relates to an insecticidal composition comprising said insecticidal combination, and method of using thereof for controlling insect infestation in plants.

**(Cont. next page)**

EP 4 691 239 A1

(52) Cooperative Patent Classification (CPC): (Cont.)

C-Sets
**A01N 33/12, A01N 43/90, A01N 65/36**

**Description**

**Field of invention:**

The present invention relates to an insecticidal combination. Particularly, the present invention relates to an insecticidal combination comprising a denatonium compound or a salt thereof and atleast one bio-insecticide. The present invention also relates to an insecticidal composition comprising said insecticidal combination, and method of using thereof for controlling insect infestation in plants.

**Background of the invention:**

Seeds and plants are frequently prone to damage from insects and insect larvae, most common being damage due to feeding on seed or plant. Many insecticides that are commonly used to protect plants (also includes agricultural plants, trees, nuts, flowers, vines, etc.) and seeds from insecticidal damage have the disadvantage that they are also dangerous for non-target insects and beneficial insects, for example honeybees, butterflies etc. Additionally, pest resistance to these known insecticides is widely reported. Therefore, there is a need for novel insecticidal solutions which are effective, and non-harmful for the beneficial or non-target insects and thus, are a safer solution for controlling insecticidal damage to plants and seeds.

As an alternative to conventional chemical insecticides which pose multiple risks to environment, plant, human and animal life, naturally occurring substances such as plant extracts, essential oils, terpenes have been employed as bio-insecticidal agents.

Botanicals, namely plant extracts and essential oils have insecticidal potential due to their larvicidal, pupicidal, and adulticidal properties. These have also been shown to possess oviposition inhibiting, repellent or insect growth regulatory effects. For e.g. neem extract or oil is made of many components. Azadirachtin is the most active component found in neem oil or extract. It reduces insect feeding and acts as a repellent. It also interferes with insect hormone systems, making it harder for insects to grow and lay eggs.

Terpenes and terpenoids are important chemical compounds widely exist in plants, which have been found to exhibit insecticidal activities, providing resistance against phytophagous insect damage. It is hypothesized that they act as allomones, or they mimic insect pheromones representing semichemical communications between insect and plant. They are found to deliver in a vapor phase through penetration to target tissues via the respiration system of insects, which can result in antifeedant, repel, allure, growth inhibition, larvacidal, neuron toxication, etc. Most terpenes and terpenoids that exhibit insecticidal activities are of the following three types: monoterpenes, sesquiterpenes and diterpenoids.

Denatonium benzoate is a known bittering and an aversive agent and is widely used as a repellent for birds, animals and insects. However very little has been studied about the insecticidal efficacy of this compound. It has been reported that denatonium benzoate alone does not exhibit any effective insecticidal activity (Refer: R.Peera Mallawa T.M.Dayani; Armstrong, G; Naylor, R.E. L, (1995). Antifeedant effects of denatonium benzoate and a neem derivative on Myzus persicae (Sulzer). Tropical agricultural research, Vol 7, 39-47).

It is a challenge faced by agriculturists and growers that safe components like botanicals or aversive agents when used by themselves do not provide a significant control of insects and damage caused by them to the plants comparable to unsafe chemical pesticides.

The present invention aims to provide a solution to the known problems and challenges with a novel insecticidal combination. Therefore, it is an objective of the present invention to provide a novel and effective combination for insect control. It is an object of the present invention to provide a synergistic insecticidal combination. It is another object of the present invention to provide a novel and effective insecticidal combination which is environmentally safe. Thus, it is an object of the present invention to provide a novel and effective insecticidal combination comprising a denatonium compound or a salt thereof, and atleast one bio-insecticide.

It is an object of the present invention to provide a novel and effective combination comprising a denatonium compound or a salt thereof and atleast one bio-insecticide selected from a plant oil, a terpene, or combinations thereof. It is also an object of the present invention to provide a novel and effective combination comprising a denatonium compound or a salt thereof, and atleast one bio-insecticide selected from orange oil, azadirachtin, eucalyptol, or combinations thereof.

It is another object of the invention to provide a method of controlling insects with said insecticidal combination or a composition comprising said combination. It is yet another object of the present invention to provide a method of protecting a seed, a plant or a plant part against damage caused by insects with said insecticidal combination or a composition comprising said combination. It is also an object of the present invention to provide a method of protecting a seed, a plant or a plant part with said insecticidal combination or a composition comprising said combination against damage caused by wireworms. It is also an object of the present invention to provide a method of protecting a corn seed, corn plant or plant part with an insecticidal combination or a composition comprising such a combination against damage caused by insects such as wireworms. It is an object of the present invention to provide an insecticidal treatment which is suitable for protecting corn seed and crop from damage caused by insects, preferably without impairing germination ability of the seeds.

**Summary of the invention:**

An aspect of the present invention provides an insecticidal combination comprising a denatonium compound or a salt thereof, and atleast one bio-insecticide.

An aspect of the present invention provides an insecticidal combination comprising a denatonium compound or a salt thereof, and atleast one bio-insecticide selected from orange oil, azadirachtin, eucalyptol, or combinations thereof. In an embodiment, the combination is provided in an insecticidally effective amount.

An aspect of the present invention provides an insecticidal combination comprising a denatonium compound or a salt thereof, and atleast one bio-insecticide combined in the weight ratio ranging from about 100:1 to 1:100.

An aspect of the present invention provides an insecticidal combination comprising a denatonium compound or a salt thereof, and atleast one bio-insecticide selected from orange oil, azadirachtin, eucalyptol, or combinations thereof combined in the weight ratio ranging from about 100:1 to 1:100.

An aspect of the present invention provides an insecticidal composition comprising a denatonium compound or a salt thereof, and atleast one bio-insecticide. In an embodiment, said composition further comprises an agrochemically suitable excipient.

An aspect of the present invention provides an insecticidal composition comprising a denatonium compound or a salt thereof, and atleast one bio-insecticide selected from orange oil, azadirachtin, eucalyptol, or combinations thereof. In an embodiment, said composition further comprises an agrochemically suitable excipient.

An aspect of the present invention provides a method of controlling insects at a locus, wherein said method comprises contacting said insects or said locus with an insecticidal combination comprising a denatonium compound or a salt thereof, and atleast one bio-insecticide or with a composition comprising said combination.

An aspect of the present invention provides a method of controlling insects at a locus, wherein said method comprises contacting said insects or said locus with an insecticidal combination comprising a denatonium compound or a salt thereof, and atleast one bio-insecticide selected from orange oil, azadirachtin, eucalyptol, or mixtures thereof; or with a composition comprising said combination.

In an embodiment, denatonium compound is denatonium benzoate.

Another aspect of the present invention provides a method of protecting a seed or a plant propagation material, a plant or a plant part against damage caused by insects, wherein said method comprises contacting the seed or the plant propagation material, the plant or the plant part with an insecticidal combination comprising a denatonium compound or a salt thereof, and atleast one bio-insecticide or with a composition comprising said combination.

Another aspect of the present invention provides a method of protecting a seed or a plant propagation material a plant or a plant part against damage caused by insects, wherein said method comprises contacting the seed or the plant propagation material the plant or the plant part with an insecticidal combination comprising a denatonium compound or a salt thereof, and atleast one bio-insecticide selected from orange oil, azadirachtin, eucalyptol, or mixtures thereof; or with a composition comprising said combination.

In an embodiment, denatonium compound or a salt thereof is applied at a rate of about 0.1 g ai/kg seed to 50 g ai/kg seed.

In an embodiment, orange oil is applied at a rate of about 0.1 g ai/kg seed to 30 g ai/kg seed.

In an embodiment, azadirachtin is applied at a rate of about 0.01 g ai/kg seed to 5 g ai/kg seed.

In an embodiment, eucalyptol is applied at a rate of about 0.1 g ai/kg seed to 50 g ai/kg seed.

In an aspect, the combination or composition of the present invention is effective in controlling wireworms or providing protection against damage caused by wireworms.

An aspect provides a method of enhancing seed germination and biostimulation in a locus, a plant, or a plant part or a plant propagation material comprising contacting the locus or the plant or the plant part or the plant propagation material with a combination comprising a denatonium compound or a salt thereof, and atleast one bio-insecticide or a composition comprising said combination.

An aspect provides a method of enhancing seed germination and biostimulation in a locus, a plant, or a plant part or a plant propagation material comprising contacting the locus, the plant or the plant part or the plant propagation material with a combination comprising a denatonium compound or a salt thereof, and atleast one bio-insecticide selected from orange oil, azadirachtin, eucalyptol, or mixtures thereof; or a composition comprising said combination.

Yet another aspect of the present invention provides a use of an insecticidal combination or a composition comprising a denatonium compound or a salt thereof, and atleast one bio-insecticide for controlling insects; protecting a seed, a plant or a plant part from damage caused by insects; and enhancing seed germination and biostimulation in a plant, or a plant part or a plant propagation material.

Yet another aspect of the present invention provides a use of an insecticidal combination or a composition comprising a denatonium compound or a salt thereof, and atleast one bio-insecticide selected from orange oil, azadirachtin, eucalyptol, or mixtures thereof for controlling insects; protecting a seed, a plant or a plant part from damage caused by insects; and enhancing seed germination and biostimulation in a plant, or a plant part or a plant propagation material.

Another aspect of the present invention provides a kit-of-parts comprising a denatonium compound or a salt thereof and atleast one bio-insecticide. Optionally, the kit-of-parts further comprises a set of instructions to mix, use and/or apply the components of the kit-of-parts.

Another aspect of the present invention provides a kit-of-parts comprising a denatonium compound or a salt thereof and atleast one bio-insecticide selected from orange oil, azadirachtin, eucalyptol or combinations thereof. Optionally, the kit-of-parts further comprises a set of instructions to mix, use and/or apply the components of the kit-of-parts.

**Detailed Description of Invention:**

For the purposes of the following detailed description, it is to be understood that the invention may assume various alternative variations and step sequences, except where expressly specified to the contrary. Moreover, other than in any operating examples, or where otherwise indicated, all numbers expressing, for example, quantities of materials/ingredients used in the specification are to be understood as being modified in all instances by the term "about". The term "about" is used to qualify the amounts of active agent shall be interpreted to mean "approximately" or "reasonably close to" and any statistically insignificant variations therefrom.

Thus, before describing the present invention in detail, it is to be understood that this invention is not limited to particularly exemplified process parameters or composition that may of course, vary. It is also to be understood that the terminology used herein is for the purpose of describing embodiments of the invention only and is not intended to limit the scope of the invention in any manner. The use of examples anywhere in this specification including examples of any terms discussed herein is illustrative only, and in no way limits the scope and meaning of the invention or of any exemplified term. Likewise, the invention is not limited to various embodiments given in this specification.

It must be noted that, as used in this specification, the singular forms "a," "an" and "the" include plural referents unless the content clearly dictates otherwise. The terms "preferred" and "preferably" refer to embodiments of the invention that may afford certain benefits, under certain circumstances.

As used herein, the terms "comprising" "including," "having," "containing," "involving," and the like are to be understood to be open-ended, i.e., to mean including but not limited to.

The term "bio-insecticide" or "biological insecticide" as used herein, refers to pest control agents/pesticide derived from natural sources like plants or plant extracts that are used to kill or inhibit or control the growth of insects. In an embodiment, bio-insecticide is selected from essential oil, plant extract, terpene or mixtures thereof. In another embodiment, bio-insecticides are selected from orange oil, azadirachtin, eucalyptol or combinations thereof. The term also includes microbial insecticide derived from natural sources like bacteria, fungi, viruses that are used to kill or inhibit or control the growth of insects.

The term "insecticidal" as used herein, unless stated otherwise, means which adversely affects the existence, growth of the target organism. Such means may comprise a complete killing action, eradicate, arresting growth, inhibition, reducing in number or any combination thereof.

The term "to control" or "controlling" insects as used herein, means to inhibit, through a toxic effect, the ability of insect pests to survive, grow, feed, and/or reproduce, or to limit insect-related damage or loss in crop plants. To "control" insects may or may not mean killing the insects, although it preferably means killing the insects.

The term " insects " as used herein, include all organisms in the class "Insecta."

The term "plant propagation material" or "propagule" is understood to denote generative parts of a plant, such as seeds, vegetative material such as cuttings or tubers, roots, fruits, tubers, bulbs, rhizomes and parts of plants, germinated plants and young plants which are to be transplanted after germination or after emergence from the soil. These young plants may be protected before transplantation by a total or partial treatment by immersion.

The term "seed" include seeds and plant propagules of all kinds including, but not limited to, true seeds, seed pieces, suckers, corms, bulbs, fruit, tubers, grains, cuttings, cut shoots and the like, and means in a preferred embodiment true seed.

The term "plants" as used herein, include but are not limited to, germinant seeds, emerging seedlings, plants emerging from vegetative propagules, and established vegetation. The term "plant" as used herein refers to any vegetation to which the compositions of the present invention can be applied for any purposes or any treatment. The term covers a whole plant or a part, such as stems, branches, bark, pistils, flowers, petals, sepals, roots, rhizomes, buds, bulbs, tubers, petioles, nodes, internodes, leaves, leaflets, meristems, root tips, shoot tips, fruits, reproductive organs such as anther, stamen, carpel, ovary, style, stigma, and so forth.

The term "insecticidally effective amount" refers to an amount of the present combination or composition that kills or inhibits the insect pests for which control is desired, in an amount not significantly toxic to the plant being treated. Particularly, the insecticidal combination or composition of the present invention is highly effective when denatonium benzoate is applied at a dose rate of about 0.1 g ai/kg seed to 30 g ai/kg seed; orange oil is applied at a dose rate of about 0.1 g ai/kg seed to 15 g ai/kg seed; azadirachtin is applied at a dose rate of about 0.01 g ai/kg seed to 5 g ai/kg seed and eucalyptol is applied at a dose rate of about 0.1 g ai/kg seed to 20 g ai/kg seed.

The term "locus" as used herein, refers to an area, a plant, or a plant part, a crop or a part thereof which is infested by or prone to pest infestation and to which a combination according to the invention is applied. It includes any habitat, breeding ground, plant or a part thereof, plant propagation material, soil, area, material or environment in which a crop is growing or may grow, or where the pest breeds, attacks, may breed or may attack.

Wireworms are the larvae of click beetles (Order: Coleoptera; Family Elateridae; Genus: Agriotes). They consist of more than 9,000 species distributed worldwide, and some are important pests of a wide variety of crops, such as corn, potato, cereals, carrot, sugar beet, sugarcane and soft fruits. Wireworm larvae may feed on the germ of corn kernels or completely hollow out the seeds, leaving only the seed coat. Wireworms may also cut off small roots or tunnel into the underground portions of the root or stem of young corn plants. These plants will appear stunted or wilted with the whorl leaves wilting first.

Surprisingly, the inventors of the present invention have found that combination of denatonium compound or a salt thereof and atleast one bio-insecticide e.g. orange oil, azadirachtin or eucalyptol resulted in an unexpected enhancement of the insect larvae mortality efficacy, and a surprising reduction in plant disease incidence and enhanced pest control in comparison to the efficacy seen with the bio-insecticides alone. It has been observed that a denatonium compound or a salt thereof which is conventionally used as a bitterant and otherwise does not demonstrate any insecticidal effect, unexpectedly shows synergistic effect in controlling/killing insects when combined with bio-insecticides. Said combination is found to be more effective in killing wireworms (Agriotes species) as compared to using bio-insecticides alone.

An embodiment of the present invention provides an insecticidal combination comprising: a denatonium compound or a salt thereof; and atleast one bio-insecticide.

An embodiment of the present invention provides an insecticidal combination, wherein said bio-insecticide is selected from essential oil, plant extract, terpene or mixtures thereof.

An embodiment of the present invention provides a combination comprising a denatonium compound or a salt thereof and atleast one bio-insecticide selected from essential oil, plant extract, terpene or mixtures thereof or a composition comprising said combination for controlling insects.

In an embodiment, the denatonium compound or a salt thereof is selected from the group consisting of denatonium chloride, denatonium citrate, denatonium saccharide, denatonium carbonate, denatonium acetate, denatonium benzoate, denatonium benzoate monohydrate, denatonium capsaicinate, and mixtures thereof.

In a preferred embodiment of the present invention, the denatonium compound or a salt thereof is denatonium benzoate.

In an embodiment of the present invention, essential oil includes but not limited to castor oil, cedarwood oil, cinnamon oil, citronella oil, clove oil, corn oil, cornmint oil, cottonseed oil, eugenol, garlic oil, geraniol, geranium oil, lemongrass oil, linseed oil, peppermint oil, rosemary oil, sesame oil, soybean oil, spearmint oil, thyme oil, orange oil or combinations thereof.

In a preferred embodiment of the present invention, essential oil is orange oil.

In an embodiment of the present invention, plant extract includes but not limited to Alliaceae family (e.g., Allium sativum); Apiaceae family (e.g., Bifora radians, Conium maculatum); Apocynaceae family (e.g., Nerium oleander); Araliaceae family (e.g., Hedera helix); Asteraceae family (e.g., Arctium lappa, Xanthium strumarium, Artemisia vulgaris, Chrysanthemum segetum, Circium arvense); Canabinaceae family (e.g., Humulus lupulus); Caprifoliaceae family (e.g., Sambucus nigra); Chenopodiaceae family (e.g., Chenopodium album); Cucurbitaceae family (e.g., Ecballium elaterium); Fabaceae family (e.g., Glycyrrhiza glabra); Guttiferae family (e.g., Hypericum perforatum); Lamiaceae family (e.g., Salvia officinalis); Lauraceae family (e.g., Laurus nobilis); Meliaceae family (e.g., Azadirachta indica); Poaceae family (e.g., Avena sterilis, Cynodon dactylon, Lolium temulentum, Sorghum halepense); Ranunculaceae family (e.g., Delphinium consolida); Resedaceae family (e.g., Reseda luted); Rubiaceae family (e.g., Galium aperiná); Rubiaceae family (e.g., Rubia tinctoria); Scrophyllaceae family (e.g., Verbascum spp such as Verbascum songaricum); Solanaceae family (e.g., Datura stramonium; Solanum nigrum); Styracaceae family (e.g., Styrax officinalis); and Urticaceae family (e.g., Urtica dioica).

In a preferred embodiment of the present invention, plant extract is Azadirachta indica (neem extract or neem oil).

In an embodiment of the present invention, terpene includes but not limited to limonene, thymol, myrcene, pinene, eucalyptol, cariophyllene, linalool, geraniol, carvacrol and combinations thereof.

In a preferred embodiment of the present invention, terpene is eucalyptol.

An embodiment of the present invention provides an insecticidal combination, wherein said bio-insecticide is selected from orange oil, azadirachtin, eucalyptol, or combinations thereof.

An embodiment of the present invention provides an insecticidal combination comprising a denatonium compound or a salt thereof, and atleast one bio-insecticide selected from orange oil, azadirachtin, eucalyptol, or combinations thereof.

An embodiment of the present invention provides an insecticidal combination comprising denatonium benzoate, and atleast one bio-insecticide selected from orange oil, azadirachtin, eucalyptol, or combinations thereof.

In a preferred embodiment, atleast one bio-insecticide is orange oil.

In a preferred embodiment, atleast one bio-insecticide is azadirachtin.

In a preferred embodiment, atleast one bio-insecticide is eucalyptol.

An embodiment of the present invention provides an insecticidal combination, wherein the denatonium compound or a salt thereof; and atleast one bio-insecticide is combined in the weight ratio ranging from about 100:1 to 1:100.

In an embodiment, denatonium compound or a salt thereof and atleast one bio-insecticide is combined in a weight ratio ranging from about 100:1 to 1:100.

In an embodiment, denatonium compound or a salt thereof and atleast one bio-insecticide is combined in a weight ratio ranging from about 75:1 to 1:75.

In an embodiment, denatonium compound or a salt thereof and atleast one bio-insecticide is combined in a weight ratio ranging from about 50:1 to 1:50.

In an embodiment, denatonium compound or a salt thereof and atleast one bio-insecticide is combined in a weight ratio ranging from about 25:1 to 1:25.

In an embodiment, denatonium compound or a salt thereof and atleast one bio-insecticide is combined in a weight ratio ranging from about 10:1 to 1:10.

In an embodiment, denatonium compound or a salt thereof and atleast one bio-insecticide is combined in a weight ratio ranging from about 5:1 to 1:5.

In an embodiment, denatonium benzoate and orange oil are combined in the weight ratio ranging from about 100:1 to 1:100, about 75:1 to 1:75, about 50:1 to 1:50, about 25:1 to 1:25, about 20:1 to 1:20, about 10: 1 to 1: 10, about 8:1 to 1:8, about 6:1 to 1:6, about 5:1 to 1:5, about 4:1 to 1:4.

A preferred embodiment of the present invention provides a combination comprising denatonium benzoate and orange oil in the weight ratio ranging from about 20:1 to 1:20.

In another preferred embodiment, denatonium benzoate and orange oil are combined in the weight ratio ranging from about 18:1 to 1:18, about 16:1 to 1:16, about 14:1 to 1:14, about 12:1 to 1:12, about 10:1 to 1:10, about 8:1 to 1:8, about 6:1 to 1:6, about 4:1 to 1:4.

In a yet another preferred embodiment, denatonium benzoate and orange oil are combined in the weight ratio ranging from about 2.08:1 to 1:0.48.

In an embodiment, the denatonium benzoate and orange oil are combined in the weight ratio ranging from about 100:1 to 1:100, preferably in the weight ratio ranging from about 25:1 to 1:25, more preferably in the weight ratio ranging from about 2.08:1 to 1:0.48.

An embodiment of the present invention provides a combination comprising denatonium benzoate and azadirachtin in the weight ratio ranging from about 100:1 to 1:100. In another embodiment, denatonium benzoate and azadirachtin are combined in the weight ratio ranging from about 75:1 to 1:75, about 50:1 to 1:50, about 25:1 to 1:25, about 10:1 to 1:10, about 5:1 to 1:5.

In a preferred embodiment, denatonium benzoate and azadirachtin are combined in the weight ratio ranging from about 47.89:1 to 1:0.02.

In an embodiment, the denatonium benzoate and azadirachtin are combined in the weight ratio ranging from about 100:1 to 1:100, preferably in the weight ratio ranging from about 75:1 to 1:75, more preferably in the weight ratio ranging from about 47.89:1 to 1:0.02.

An embodiment of the present invention provides a combination comprising denatonium benzoate and eucalyptol in the weight ratio ranging from about 100:1 to 1:100. In another embodiment, denatonium benzoate and eucalyptol are combined in the weight ratio ranging from about 75:1 to 1:75, about 50:1 to 1:50, about 25:1 to 1:25, about 10:1 to 1:10, about 5:1 to 1:5.

A preferred embodiment of the present invention provides a combination comprising denatonium benzoate and eucalyptol in the weight ratio ranging from about 10:1 to 1:10. In another preferred embodiment, denatonium benzoate and eucalyptol are combined in the weight ratio ranging from about 9:1 to 1:9, about 8:1 to 1:8, about 7:1 to 1:7, about 6:1 to 1:6, about 5:1 to 1:5, about 4:1 to 1:4, about 3:1 to 1:3, about 2:1 to 1:2. In a yet another embodiment, denatonium benzoate and eucalyptol are combined in the weight ratio ranging from about 0.84:1 to 1:1.19.

In an embodiment, the denatonium benzoate and eucalyptol are combined in the weight ratio ranging from about 100:1 to 1:100, preferably in the weight ratio ranging from about 50:1 to 1:50, more preferably in the weight ratio ranging from about 0.84:1 to 1:1.19.

An embodiment of the present invention provides an insecticidal composition comprising a denatonium compound or a salt thereof, and atleast one bio-insecticide. In an embodiment, said composition further comprises an agrochemically suitable excipient.

In an embodiment, the present invention provides an insecticidal composition comprising a denatonium compound or a salt thereof, and atleast one bio-insecticide, wherein said composition further comprising an agrochemically suitable excipient.

An embodiment of the present invention provides an insecticidal composition comprising a denatonium compound or a salt thereof, and atleast one bio-insecticide selected from orange oil, azadirachtin, eucalyptol, or combinations thereof.

In an embodiment, the present invention provides an insecticidal composition comprising denatonium benzoate, and atleast one bio-insecticide selected from orange oil, azadirachtin, eucalyptol, or combinations thereof.

In an embodiment, said composition further comprises an agrochemically suitable excipient.

In an embodiment, the present invention provides an insecticidal composition comprising said combination, wherein said composition further comprising an agrochemically suitable excipient.

An embodiment of the present invention provides an insecticidal composition comprising denatonium compound or a salt thereof, and atleast one bio-insecticide selected from orange oil, azadirachtin, eucalyptol, or combinations thereof and an agrochemically suitable excipient.

An embodiment of the present invention provides an insecticidal composition comprising denatonium benzoate, and atleast one bio-insecticide selected from orange oil, azadirachtin, eucalyptol, or combinations thereof and an agrochemically suitable excipient.

In an embodiment, the amount of denatonium compound or a salt thereof in the composition ranges from about 1 % w/w or w/v to about 99 % w/w or w/v of the total weight or volume of the composition. In another embodiment, the amount of denatonium compound or a salt thereof in the composition ranges from about 1 % w/w or w/v to about 50 % w/w or w/v of the total weight or volume of the composition. In an embodiment, the amount of denatonium compound or a salt thereof in the composition ranges from about 1 % w/w or w/v to about 30 % w/w or w/v of the total weight or volume of the composition. In a preferred embodiment, the amount of denatonium compound or a salt thereof in the composition ranges from about 5 % w/w or w/v to about 20% w/w or w/v of the total weight or volume of the composition.

In an embodiment, the amount of eucalyptol in the composition ranges from about 1 % w/w or w/v to about 99 % w/w or w/v of the total weight or volume of the composition. In another embodiment, the amount of eucalyptol in the composition ranges from about 30 % w/w or w/v to about 99 % w/w or w/v of the total weight or volume of the composition. In a preferred embodiment, the amount of eucalyptol in the composition ranges from about 50 % w/w or w/v to about 99 % w/w or w/v of the total weight or volume of the composition.

In an embodiment, the amount of orange oil in the composition ranges from about 1 % w/w or w/v to about 99 % w/w or w/v of the total weight or volume of the composition. In another embodiment, the amount of orange oil in the composition ranges from about 20 % w/w or w/v to about 90 % w/w or w/v of the total weight or volume of the composition. In an embodiment, the amount of orange oil in the composition ranges from about 30 % w/w or w/v to about 80 % w/w or w/v of the total weight or volume of the composition. In a preferred embodiment, the amount of orange oil in the composition ranges from about 40 % w/w or w/v to about 70 % w/w or w/v of the total weight or volume of the composition.

In an embodiment, the amount of azadirachtin in the composition ranges from about 1 % w/w or w/v to about 99 % w/w or w/v of the total weight or volume of the composition. In another embodiment, the amount of azadirachtin in the composition ranges from about 1 % w/w or w/v to about 50 % w/w or w/v of the total weight or volume of the composition. In an embodiment, the amount of azadirachtin in the composition ranges from about 1 % w/w or w/v to about 30 % w/w or w/v of the total weight or volume of the composition. In a preferred embodiment, the amount of azadirachtin in the composition ranges from about 1 % w/w or w/v to about 15% w/w or w/v of the total weight or volume of the composition.

In an embodiment, the present invention provides an insecticidal composition comprising denatonium benzoate and orange oil. In an embodiment, said composition further comprises an agrochemically suitable excipient.

In an embodiment, the present invention provides an insecticidal composition comprising denatonium benzoate and azadirachtin. In an embodiment, said composition further comprises an agrochemically suitable excipient.

In an embodiment, the present invention provides an insecticidal composition comprising denatonium benzoate and eucalyptol. In an embodiment, said composition further comprises an agrochemically suitable excipient.

According to an embodiment of present invention, agrochemically suitable excipients includes but not limited to diluents, adjuvants, co-solvents, surfactants, colorants, dispersants, emulsifiers, thickeners, antifreeze agents, biocides, anti-foam agents, stabilizers, wetting agents, chelating agents, buffering agents or a mixture thereof. However, those skilled in the art will appreciate that it is possible to utilize additional agrochemically acceptable excipients without departing from the scope of the present invention.

The surfactants may be selected from non-ionic, anionic or cationic surfactants.

Examples of nonionic surfactants include polyarylphenol polyethoxy ethers, polyalkylphenol polyethoxy ethers, polyglycol ether derivatives of saturated fatty acids, polyglycol ether derivatives of unsaturated fatty acids, polyglycol ether derivatives of aliphatic alcohols, polyglycol ether derivatives of cycloaliphatic alcohols, fatty acid esters of polyoxyethylene sorbitan, alkoxylated vegetable oils, alkoxylated acetylenic diols, polyalkoxylated alkylphenols, fatty acid alkoxylates, sorbitan alkoxylates, sorbitol esters, $C_8$-$C_{22}$ alkyl or alkenyl polyglycosides, polyalkoxy styrylaryl ethers, alkylamine oxides, block copolymer ethers, polyalkoxylated fatty glyceride, polyalkylene glycol ethers, linear aliphatic or aromatic polyesters, organo silicones, polyaryl phenols, sorbitol ester alkoxylates, polyalkylene oxide block copolymers, acrylic copolymers and mono- and diesters of ethylene glycol and mixtures thereof.

Examples of anionic surfactants include alcohol sulfates, alcohol ether sulfates, alkylaryl ether sulfates, alkylaryl sulfonates such as alkylbenzene sulfonates and alkylnaphthalene sulfonates and salts thereof, alkyl sulfonates, mono- or di-phosphate esters of polyalkoxylated alkyl alcohols or alkylphenols , mono- or di-sulfosuccinate esters of $C_{12}$-$C_{15}$ alkanols or polyalkoxylated $C_{12}$-$C_{15}$ alkanols, alcohol ether carboxylates, phenolic ether carboxylates, polybasic acid esters of ethoxylated polyoxyalkylene glycols consisting of oxybutylene or the residue of tetrahydrofuran, sulfoalkylamides and salts thereof such as N-methyl-N-oleoyltaurate Na salt, polyoxyalkylene alkylphenol carboxylates, polyoxyalkylene alcohol carboxylates alkyl polyglycoside/alkenyl succinic anhydride condensation products, alkyl ester sulfates, napthalene sulfonates, naphthalene formaldehyde condensates, alkyl sulfonamides, sulfonated aliphatic polyesters, sulfate esters of styrylphenyl alkoxylates, and sulfonate esters of styrylphenyl alkoxylates and their corresponding sodium, potassium, calcium, magnesium, zinc, ammonium, alkylammonium, diethanolammonium, or triethanolammonium salts, salts of ligninsulfonic acid such as the sodium, potassium, magnesium, calcium or ammonium salt, polyarylphenol polyalkoxyether sulfates and polyarylphenol polyalkoxyether phosphates, and sulfated alkyl phenol ethoxylates and phosphated alkyl phenol ethoxylates.

Cationic surfactants include alkanol amides of $C_8$-$C_{18}$ fatty acids and $C_8$-$C_{18}$ fatty amine polyalkoxylates, $C_{10}$-$C_{18}$ alkyldimethylbenzylammonium chlorides, coconut alkyldimethylaminoacetic acids, and phosphate esters of $C_8$-$C_{18}$ fatty amine polyalkoxylates.

Emulsifiers which can be advantageously employed herein can be readily determined by those skilled in the art and include various non-ionic, anionic, cationic and amphoteric emulsifiers, or a blend of two or more emulsifiers. Examples of nonionic emulsifiers useful in preparing the emulsifiable concentrates include the polyalkylene glycol ethers and condensation products of alkyl and aryl phenols, aliphatic alcohols, aliphatic amines or fatty acids with ethylene oxide, propylene oxides such as the ethoxylated alkyl phenols and carboxylic esters solubilized with the polyol or polyoxyalkylene. Cationic emulsifiers include quaternary ammonium compounds and fatty amine salts. Anionic emulsifiers include the oil-soluble salts (e.g., calcium) of alkylaryl sulfonic acids, oil-soluble salts or sulfated polyglycol ethers and appropriate salts of phosphated polyglycol ether.

In an embodiment, colorants may be selected from iron oxide, titanium oxide and Prussian Blue, and organic dyestuffs, such as alizarin dyestuffs, azo dyestuffs or metal phthalocyanine dyestuffs, and trace elements, such as salts of iron, manganese, boron, copper, cobalt, molybdenum and zinc.

Another embodiment involves addition of a thickener or binder which may be selected from but not limited to molasses, granulated sugar, alginates, karaya gum, jaguar gum, tragacanth gum, polysaccharide gum, mucilage, xanthan gum or combination thereof. In another embodiment, the binder may be selected from silicates such as magnesium aluminium silicate, polyvinyl acetates, polyvinyl acetate copolymers, polyvinyl alcohols, polyvinyl alcohol copolymers, celluloses, including ethylcelluloses and methylcelluloses, hydroxymethyl celluloses, hydroxypropylcelluloses, hydroxymethylpropyl-celluloses, polyvinylpyrolidones, dextrins, malto-dextrins, polysaccharides, fats, oils, proteins, gum arabics, shellacs, vinylidene chloride, vinylidene chloride copolymers, calcium lignosulfonates, acrylic copolymers, starches, polyvinylacrylates, zeins, gelatin, carboxymethylcellulose, chitosan, polyethylene oxide, acrylimide polymers and copolymers, polyhydroxyethyl acrylate, methylacrylimide monomers, alginate, ethylcellulose, polychloroprene and syrups or mixtures thereof; polymers and copolymers of vinyl acetate, methyl cellulose, vinylidene chloride, acrylic, cellulose, polyvinylpyrrolidone and polysaccharide; polymers and copolymers of vinylidene chloride and vinyl acetate-ethylene copolymers; combinations of polyvinyl alcohol and sucrose; plasticizers such as glycerol, propylene glycol, polyglycols.

In another embodiment, antifreeze agent(s) added to the composition may be alcohols selected from the group comprising of but not limited to ethylene glycol, 1,2-propylene glycol, 1,3-propylene glycol, 1,2-butanediol, 1,3-butanediol, 1,4-butanediol, 1,4-pentanediol, 3-methyl-1,5-pentanediol, 2,3-dimethyl-2,3-butanediol, trimethylol propane, mannitol, sorbitol, glycerol, pentaerythritol, 1,4-cyclohexanedimethanol, xylenol, bisphenols such as bisphenol A or the like. In addition, ether alcohols such as diethylene glycol, triethylene glycol, tetraethylene glycol, polyoxyethylene or polyoxypropylene glycols of molecular weight up to about 4000, diethylene glycol monomethylether, diethylene glycol monoethylether, triethylene glycol monomethylether, butoxyethanol, butylene glycol monobutylether, dipentaerythritol, tripentaerythritol, tetrapentaerythritol, diglycerol, triglycerol, tetraglycerol, pentaglycerol, hexaglycerol, heptaglycerol, octaglycerol.

According to an embodiment, biocides may be selected from benzothiazoles, 1,2-benzisothiazolin-3-one, sodium dichloro-s-triazinetrione, sodium benzoate, potassium sorbate, 1,2-phenyl-isothiazolin-3-one, inter chloroxylenol paraoxybenzoate butyl.

According to an embodiment, antifoam agent may be selected from Polydimethoxysiloxane, polydimethylsiloxane, Alkyl poly acrylates, Castor Oil, Fatty Acids, Fatty Acids Esters, Fatty Acids Sulfate, Fatty Alcohol, Fatty Alcohol Esters, Fatty Alcohol Sulfate, Foot Olive Oil, Mono & Di Glyceride, Paraffin Oil, Paraffin Wax, Poly Propylene Glycol, Silicones Oil, Vegetable Fats, Vegetable Fats Sulfate, Vegetable Oil, Vegetable Oil Sulfate, Vegetable Wax, Vegetable Wax Sulfate, agents based on silicon or magnesium stearate.

The additives to be used for the formulation include, for example, a solid carrier such as kaolinite, sericite, diatomaceous earth, slaked lime, calcium carbonate, talc, white carbon, kaoline, bentonite, clay, sodium carbonate, sodium bicarbonate, mirabilite, zeolite or starch; a solvent such as water, toluene, xylene, solvent naphtha, dioxane, dimethylsulfoxide, N,N-dimethylformamide, dimethylacetamide, N-methyl-2-pyrrolidone or an alcohol; an anionic surfactant such as a salt of fatty acid, a benzoate, a polycarboxylate, a salt of alkylsulfuric acid ester, an alkyl sulfate, an alkylaryl sulfate, an alkyl diglycol ether sulfate, a salt of alcohol sulfuric acid ester, an alkyl sulfonate, an alkylaryl sulfonate, an aryl sulfonate, a lignin sulfonate, an alkyldiphenylether disulfonate, a polystyrene sulfonate, a salt of alkylphosphoric acid ester, an alkylaryl phosphate, a styrylaryl phosphate, a salt of polyoxyethylene alkyl ether sulfuric acid ester, a polyoxyethylene alkylaryl ether sulfate, a salt of polyoxyethylene alkylaryl ether sulfuric acid ester, a polyoxyethylene alkyl ether phosphate, a salt of polyoxyethylene alkylaryl phosphoric acid ester, a salt of polyoxyethylene aryl ether phosphoric acid ester, a naphthalene sulfonic acid condensed with formaldehyde or a salt of alkylnaphthalene sulfonic acid condensed with formaldehyde; a nonionic surfactant such as a sorbitan fatty acid ester, a glycerin fatty acid ester, a fatty acid polyglyceride, a fatty acid alcohol polyglycol ether, acetylene glycol, acetylene alcohol, an oxyalkylene block polymer, a polyoxyethylene alkyl ether, a polyoxyethylene alkylaryl ether, a polyoxyethylene styrylaryl ether, a polyoxyethylene glycol alkyl ether, polyethylene glycol, a polyoxyethylene fatty acid ester, a polyoxyethylene sorbitan fatty acid ester, a polyoxyethylene glycerin fatty acid ester, a polyoxyethylene hydrogenated castor oil or a polyoxypropylene fatty acid ester; and a vegetable oil or mineral oil such as olive oil, kapok oil, castor oil, palm oil, camellia oil, coconut oil, sesame oil, corn oil, rice bran oil, peanut oil, cottonseed oil, soybean oil, rapeseed oil, linseed oil, tung oil or liquid paraffins. These additives may suitably be selected for use alone or in combination as a mixture of two or more of them, so long as the object of the present invention is met. Further, additives other than the above-mentioned may be suitably selected for use among those known in this field. For example, various additives commonly used, such as a filler, a thickener, an anti-settling agent, an anti-freezing agent, a dispersion stabilizer, a safener, an anti-mold agent, a bubble agent, a disintegrator and a binder, may be used.

The agrochemical formulation may also comprise one or more antioxidants. Preferably, the agrochemical formulation comprises an antioxidant. Antioxidants are, for example, amino acids (e.g. glycine, histidine, tyrosine, tryptophan) and derivatives thereof, imidazole and imidazole derivatives (e.g. urocanic acid), peptides, such as, for example, D,L-carnosine, **D**-carnosine, L-carnosine and derivatives thereof (e.g. anserine), carotenoids, carotenes (e.g. □-carotene, β-carotene, lycopene) and derivatives thereof, lipoic acid and derivatives thereof (e.g. dihydrolipoic acid), aurothioglucose, propylthiouracil and further thio compounds (e.g. thioglycerol, thiosorbitol, thioglycolic acid, thioredoxin, glutathione, cysteine, cystine, cystamine and the glycosyl, N-acetyl, methyl, ethyl, propyl, amyl, butyl, lauryl, palmitoyl, oleyl, γ-linoleyl, cholesteryl and glyceryl esters thereof), and salts thereof, dilauryl thiodipropionate, distearyl thiodipropionate, thiodipropionic acid and derivatives thereof (esters, ethers, peptides, lipids, nucleotides, nucleosides and salts), and sulfoximine compounds (e.g. buthionine sulfoximines, homocysteine sulfoximine, buthionine sulfones, penta-, hexa-, heptathionine sulfoximine) in very low tolerated doses (e.g. pmol/kg to pmol/kg), also metal chelating agents (e.g. □-hydroxy fatty acids, EDTA, EGTA, phytic acid, lactoferrin), □-hydroxy acids (e.g. citric acid, lactic acid, malic acid), humic acids, bile acid, bile extracts, gallic esters (e.g. propyl, octyl and dodecyl gallate), flavonoids, catechins, bilirubin, biliverdin and derivatives thereof, unsaturated fatty acids and derivatives thereof (e.g. γ-linolenic acid, linoleic acid, arachidonic acid, oleic acid), folic acid and derivatives thereof, hydroquinone and derivatives thereof (e.g. arbutin), ubiquinone and ubiquinol, and derivatives thereof, vitamin C and derivatives thereof (e.g. ascorbyl palmitate, stearate, dipalmitate, acetate, Mg ascorbyl phosphates, sodium and magnesium ascorbate, disodium ascorbyl phosphate and sulfate, potassium ascorbyl tocopheryl phosphate, chitosan ascorbate), isoascorbic acid and derivatives thereof, tocopherols and derivatives thereof (e.g. tocopheryl acetate, linoleate, oleate and succinate, tocophereth-5, tocophereth-10, tocophereth-12, tocophereth-18, tocophereth-50, tocophersolan), vitamin A and derivatives (e.g. vitamin A palmitate), the coniferyl benzoate of benzoin resin, rutin, rutinic acid and derivatives thereof, disodium rutinyl disulfate, cinnamic acid and derivatives thereof (e.g. ferulic acid, ethyl ferulate, caffeeic acid), kojic acid, chitosan glycolate and salicylate, butylhydroxytoluene, butylhydroxyanisol, nordihydroguaiacic acid, nordihydroguaiaretic acid, trihydroxybutyrophenone, uric acid and derivatives thereof, mannose and derivatives thereof, selenium and selenium derivatives (e.g. selenomethionine), stilbenes and stilbene derivatives (e.g. stilbene oxide, trans-stilbene oxide). According to the invention, suitable derivatives (salts, esters, sugars, nucleotides, nucleosides, peptides and lipids) and mixtures of these specified active ingredients or plant extracts (e.g. teatree oil, rosemary extract and rosemarinic acid) which comprise these antioxidants can be used. In general, mixtures of the aforementioned antioxidants are possible.

According to an embodiment, examples of suitable solvents are water, aromatic solvents (for example, xylene), paraffins (for example mineral oil fractions such as kerosene or diesel oil), coal tar oils and oils of vegetable or animal origin, aliphatic, cyclic and aromatic hydrocarbons, for example toluene, xylene, paraffin, tetrahydronaphthalene, alkylated naphthalenes or their derivatives, alcohols (for example methanol, butanol, pentanol, benzyl alcohol, cyclohexanol), ketones (for example cyclohexanone, gamma-butyrolactone), pyrrolidones (NMP, NEP, NOP), acetates (glycol diacetate), glycols, fatty acid dimethylamides, fatty acids and fatty acid esters, isophorone and dimethylsulfoxide. In principle, solvent mixtures may also be used.

According to an embodiment, suitable surfactants are alkali metal, alkaline earth metal and ammonium salts of lignosulfonic acid, naphthalenesulfonates, phenolsulfonic acid, dibutylnaphthalenesulfonic acid, alkylarylsulfonates, alkyl sulfates, alkylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol and formaldehyde, polyoxyethylene octylphenol ethers, ethoxylated isooctylphenol, octylphenol, nonylphenol, alkylphenol polyglycol ethers, tributylphenyl polyglycol ethers, tristearylphenyl polyglycol ethers, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignosulfite waste liquors and methylcellulose.

According to an embodiment, examples of suitable carriers are mineral earths such as silica gels, silicates, talc, kaolin, attaclay, attapulgite, limestone, lime, chalk, bole, loess, clay, dolomite, diatomaceous earth, calcium sulfate, magnesium sulfate, magnesium oxide, ground synthetic materials, fertilizers, such as, for example, ammonium sulfate, ammonium phosphate, ammonium nitrate, ureas, and products of vegetable origin, such as cereal meal, tree bark meal, wood meal and nutshell meal, cellulose powders, polyvinylpyrrolidone and other solid carriers.

Suitable preservatives are for example 1,2-benzisothiazolin-3-one and/or 2-Methyl-2H-isothiazol-3-one or sodium benzoate or benzoic acid.

In an embodiment, the combinations and compositions according to the invention can be converted into customary formulations, typically by mixing the actives in the composition with an inert carrier and adding surfactants and other adjuvants and carriers as needed.

The combinations can be formulated into solid, or liquid formulations, including but not limited to wettable powders, granules, dusts, Soluble (liquid) concentrates, suspension concentrates, oil in water emulsion, water in oil emulsion, emulsifiable concentrates, capsule suspensions, ZC formulations, oil dispersions or other known formulation types. The composition may also be used for treatment of a plant propagation material such as seeds etc. These formulations are produced in the known manner, for example by mixing the active compound (s) with suitable extenders, that is, liquid solvents and/or solid carriers, optionally with the use of surfactants, that is, emulsifiers and/or dispersants.

The compositions of the invention may thus be formulated as: a water-soluble concentrate (SL), an emulsifiable concentrate (EC), an emulsion (EW), a micro-emulsion (ME), a suspension concentrate (SC), an oil-based suspension concentrate (OD), a flowable suspension (FS), a water-dispersible granule (WG), a water-soluble granule (SG), a water-dispersible powder (WP), a water soluble powder (SP), a granule (GR), an encapsulated granule (CG), a fine granule (FG), a macrogranule (GG), an aqueous suspo-emulsion (SE), a micro-encapsulated suspension (CS), and a microgranule (MG).

In an embodiment, the pesticidal composition is selected from powder for dry soil application (DS), granule/soil applied (GR), Controlled (slow or fast) release granules (CR), or bags (bags in water soluble pouch), water soluble granule (SG), water dispersible granule (WG or WDG), or wettable granules or soil applied granules (SAG).

The compositions of the present invention can be applied in a variety of ways known to those skilled in the art, at various concentrations. The compositions are useful in preventing, controlling and/or treating insect infestations in plants, plant parts and/or surroundings by preemergence or postemergence application to plants, plant parts and/or surroundings is desired.

An embodiment of the present invention provides a method of controlling insects at a locus comprising, contacting said insects or said locus with an insecticidal combination comprising a denatonium compound or a salt thereof, and atleast one bio-insecticide or a composition comprising said combination.

An embodiment of the present invention provides a method of controlling insects at a locus comprising, contacting said insects or said locus with an insecticidal combination comprising a denatonium compound or a salt thereof, and atleast one bio-insecticide selected from orange oil, azadirachtin, eucalyptol, or mixtures thereof; or a composition comprising said combination.

In an embodiment, the present invention provides a method of controlling insects at a locus comprising, contacting said insects or said locus with an insecticidal combination comprising denatonium benzoate, and atleast one bio-insecticide selected from orange oil, azadirachtin, eucalyptol, or mixtures thereof; or a composition comprising said combination.

In an embodiment, said locus may be the medium in which plant is growing or intended to be grown or seed is sowed or to be sown, such as soil. In another embodiment, said locus is a plant or a plant part. In another embodiment, said locus is the habitat of insects and its breeding ground.

In an embodiment, the present invention provides a method of controlling insects at a locus comprising, contacting said insects or said locus with a combination or a composition comprising denatonium benzoate and orange oil.

In an embodiment, the present invention provides a method of controlling insects at a locus comprising, contacting said insects or said locus with a combination or a composition comprising denatonium benzoate and azadirachtin.

In an embodiment, the present invention provides a method of controlling insects at a locus comprising, contacting said insects or said locus with a combination or a composition comprising denatonium benzoate and eucalyptol.

The combinations and compositions of the present invention may be used for crops or seeds including but not limited to corn, rice, wheat, barley, rye, oat, sorghum, cotton, soybean, peanut, buckwheat, beet, rapeseed, sunflower, sugar cane, tobacco, etc.; vegetables: solanaceous vegetables such as eggplant, tomato, pimento, pepper, potato, etc., cucurbit vegetables such as cucumber, pumpkin, zucchini, water melon, melon, squash, etc., cruciferous vegetables such as radish, white turnip, horseradish, kohlrabi, Chinese cabbage, cabbage, leaf mustard, broccoli, cauliflower, etc., asteraceous vegetables such as burdock, crown daisy, artichoke, lettuce, etc, liliaceous vegetables such as green onion, onion, garlic, and asparagus, ammiaceous vegetables such as carrot, parsley, celery, parsnip, etc., chenopodiaceous vegetables such as spinach, Swiss chard, etc., lamiaceous vegetables such as Perilla frutescens, mint, basil, etc, strawberry, sweet potato, Dioscorea japonica, colocasia, etc., flowers, foliage plants, turf grasses, fruits: pome fruits such apple, pear, quince, etc, stone fleshy fruits such as peach, plum, nectarine, Prunus mume, cherry fruit, apricot, prune, etc., citrus fruits such as orange, lemon, rime, grapefruit, etc., nuts such as chestnuts, walnuts, hazelnuts, almond, pistachio, cashew nuts, macadamia nuts, etc. berries such as blueberry, cranberry, blackberry, raspberry, etc., grape, kaki fruit, olive, plum, banana, coffee, date palm, coconuts, etc. , trees other than fruit trees; tea, mulberry, flowering plant, trees such as ash, birch, dogwood, Eucalyptus, Ginkgo biloba, lilac, maple, Quercus, poplar, Judas tree, Liquidambar formosana, plane tree, zelkova, Japanese arborvitae, fir wood, hemlock, juniper, Pinus, Picea, and Taxus cuspidate, etc.

In a preferred embodiment, the said locus is a crop or a part thereof, preferably a cereal crop. In another preferred embodiment, the cereal crop is selected from wheat, rye, barley, oats, sorghum, millet, and maize/corn, buckwheat and quinoa. In another preferred embodiment, the cereal crop is maize/corn.

The composition of this invention is effective against a wide spectrum of foliar-feeding, fruit-feeding, stem or root feeding, seed-feeding, aquatic and soil-inhabiting arthropods (term "arthropods" includes insects, mites and nematodes) which are pests of growing and stored agronomic crops, forestry, greenhouse crops, ornamentals, nursery crops, stored food and fiber products, livestock, household, and public and animal health. Nevertheless, the composition of present invention is effective against pests that include: eggs, larvae and adults of the Order Lepidoptera; eggs, foliar-feeding, fruit-feeding, root-feeding, seed-feeding larvae and adults of the Order Coleoptera; eggs, immatures and adults of the Orders Hemiptera and Homoptera; eggs, larvae, nymphs and adults of the Order Acari; eggs, immatures and adults of the Orders Thysanoptera, Orthoptera and Dermaptera; eggs, immatures and adults of the Order Diptera; and eggs, juveniles and adults of the Phylum Nematoda. The compositions of invention are also effective against pests of the Orders Hymenoptera, Isoptera, Siphonaptera, Blattaria, Thysanura and Psocoptera; pests belonging to the Class Arachnida and Phylum Platyhelminthes; southern corn rootworm (Diabrotica undecimpunctata howardi), aster leafhopper (Mascrosteles fascifrons), boll weevil (Anthonomus grandis), two-spotted spider mite (Tetranychus urticae), fall armyworm (Spodoptera frugiperda), black bean aphid (Aphis fabae), green peach aphid (Myzus persica), cotton aphid (Aphis gossypii), Russian wheat aphid (Diuraphis noxia), English grain aphid (Sitobion avenae), whitefly (Bemisia tabacii), tobacco budworm (Heliothis virescens), rice water weevil (Lissorhoptrus oryzophilus), rice leaf beetle (Oulema oryzae), whitebacked planthopper (Sogatella furcifera), green leafhopper (Nephotettix cincticeps), brown planthopper (Nilaparvata lugens), small brown planthopper (Laodelphax striatellus), rice stem borer (Chilo suppressalis), rice leafroller (Cnaphalocrocis medinalis), black rice stink bug (Scotinophara lurida), rice stink bug (Oebalus pugnax), rice bug (Leptocorisa chinensis), slender rice bug (Cletus puntiger), southern green stink bug (Nezara viridula) and german cockroach (Blatella germanica); on mites, demonstrating ovicidal, larvicidal and chemosterilant activity against such families as Tetranychidae including Tetranychus urticae, Tetranychus cinnabarinus, Tetranychus mcdanieli, Tetranychus pacificus, Tetranychus turkestani, Byrobia rubrioculus, Panonychus ulmi, Panonychus citri, Eotetranychus carpini borealis, Eotetranychus, hicoriae, Eotetranychus sexmaculatus, Eotetranychus yumensis, Eotetranychus banksi and Oligonychus pratensis; Tenuipalpidae including Brevipalpus lewisi, Brevipalpus phoenicis, Brevipalpus califomicus and Brevipalpus obovatus; Eriophyidae including Phyllocoptmta oleivora, Eriophyes sheldoni, Aculus cornutus, Epitrimerus pyri and Eriophyes mangiferae.

In a preferred embodiment, said insects comprising insects of Coleoptera order, preferably of Agriotes genus.

In a preferred embodiment, said insects are wireworms or elaters or snapping beetles or spring beetles or skipjacks.

In an embodiment, combinations of the present invention or compositions comprising said combinations may be applied by means of direct application, soil drench, foliar, in-furrow, systemic, topical, direct and residual sprays, aerial sprays, gels, seed treatment, microencapsulations, systemic uptake, baits, eartags, boluses, foggers, fumigants, aerosols, dusts. The compounds of this invention may also be impregnated into materials for fabricating invertebrate control devices (e.g., insect netting).

Seed treatment techniques include seed dressing, seed coating, seed dusting, seed soaking, and seed pelleting.

In furrow applications typically include the steps of making a furrow in cultivated land, seeding the furrow with seeds, applying the composition to the furrow, and closing the furrow.

An embodiment of the present invention provides a method of protecting a seed or a plant propagation material, a plant or a plant part, said method comprising contacting the seed or the plant propagation material, the plant or the plant part with a combination comprising a denatonium compound or a salt thereof and atleast one bio-insecticide or with a composition comprising said combination.

An embodiment of the present invention provides a method of protecting a seed, a plant or a plant part, said method comprising contacting the seed, th plant or athe plant part with a combination comprising a denatonium compound or a salt thereof and atleast one bio-insecticide selected from orange oil, azadirachtin, eucalyptol, or mixtures thereof or with a composition comprising said combination.

An embodiment of the present invention provides a method of protecting a seed, a plant or a plant part, said method comprising contacting the seed, the plant or the plant part with a combination comprising denatonium benzoate and atleast one bio-insecticide selected from orange oil, azadirachtin, eucalyptol, or mixtures thereof or with a composition comprising said combination.

In a preferred embodiment, the combinations of the present invention or compositions comprising said combinations are applied as a seed treatment.

In an embodiment, denatonium compound or a salt thereof is applied at a dose rate of about 0.1 g ai/kg seed to 50 g ai/kg seed.

In an embodiment, denatonium compound or a salt thereof is applied at a dose rate of about 0.1 g ai/kg seed to 30 g ai/kg seed.

In a preferred embodiment, denatonium compound or a salt thereof is applied at a dose rate of about 0.5 g ai/kg seed to 20 g ai/kg seed.

In another preferred embodiment, denatonium compound or a salt thereof is applied at a dose rate of about 1 g ai/kg seed to 10 g ai/kg seed.

In another preferred embodiment, denatonium compound or a salt thereof is applied at a dose rate of about 1 g ai/kg seed to 5 g ai/kg seed.

In a yet another preferred embodiment, denatonium compound or a salt thereof is applied at a dose rate of about 1.253 g ai/kg seed.

In an embodiment, said denatonium compound or a salt thereof is applied at a dose rate of about 0.1 g ai/kg seed to 50 g ai/kg seed, preferably at a dose rate of about 1 g ai/kg seed to 10 g ai/kg seed, more preferably at a dose rate of about 1.253 g ai/kg seed.

In an embodiment, the bio-insecticide is applied at a dose rate of about 0.01 g ai/kg seed to about 50 g ai/kg seed, preferably at a dose rate of about 1 g ai/kg seed to 10 g ai/kg seed, or preferably at a dose rate of about 0.4 g ai/kg seed to 5 g ai/kg seed, or preferably at a dose rate of about 0.01 g ai/kg seed to 1 g ai/kg seed.

In an embodiment, orange oil is applied at a dose rate of about 0.1 g ai/kg seed to 30 g ai/kg seed.

In an embodiment, orange oil is applied at a dose rate of about 0.1 g ai/kg seed to 15 g ai/kg seed.

In another preferred embodiment, orange oil is applied at a dose rate of about 0.3 g ai/kg seed to 10 g ai/kg seed.

In another preferred embodiment, orange oil is applied at a dose rate of about 0.4 g ai/kg seed to 5 g ai/kg seed.

In another preferred embodiment, orange oil is applied at a dose rate of about 0.5 g ai/kg seed to 1 g ai/kg seed.

In a yet another preferred embodiment, orange oil is applied at a dose rate of about 0.6 g ai/kg seed.

In an embodiment, azadirachtin is applied at a dose rate of about 0.01 g ai/kg seed to 5 g ai/kg seed.

In another preferred embodiment, azadirachtin is applied at a dose rate of about 0.01g ai/kg seed to 4 g ai/kg seed.

In another preferred embodiment, azadirachtin is applied at a dose rate of about 0.01 g ai/kg seed to 3 g ai/kg seed.

In another preferred embodiment, azadirachtin is applied at a dose rate of about 0.01 g ai/kg seed to 1 g ai/kg seed.

In a yet another preferred embodiment, azadirachtin is applied at a dose rate of about 0.0261 g ai/kg seed.

In an embodiment, the eucalyptol is applied at a dose rate of about 0.1 g ai/kg seed to 50 g ai/kg seed.

In an embodiment, the eucalyptol is applied at a dose rate of about 0.1 g ai/kg seed to 20 g ai/kg seed.

In another preferred embodiment, eucalyptol is applied at a dose rate of about 0.5 g ai/kg seed to 15 g ai/kg seed.

In another preferred embodiment, eucalyptol is applied at a dose rate of about 1 g ai/kg seed to 10 g ai/kg seed.

In another preferred embodiment, eucalyptol is applied at a dose rate of about 1 g ai/kg seed to 5 g ai/kg seed.

In another preferred embodiment, eucalyptol is applied at a dose rate of about 1 g ai/kg seed to 3 g ai/kg seed.

In a yet another preferred embodiment, eucalyptol is applied at a dose rate of about 1.4856 g ai/kg seed.

An embodiment of the present invention provides a seed treatment combination or a composition comprising a denatonium compound or a salt thereof, and atleast one bio-insecticide selected from orange oil, azadirachtin, eucalyptol, or mixtures thereof.

An embodiment of the present invention provides a seed treatment combination or a composition comprising a denatonium benzoate, and atleast one bio-insecticide selected from orange oil, azadirachtin, eucalyptol, or mixtures thereof. In an embodiment, the seeds treated with the combinations and compositions of the present invention may be selected from any plant or crop embodied in this specification.

In a preferred embodiment, the seeds include seeds of cereal crops.

In a preferred embodiment, the seeds include seeds of cereal crops such as wheat, rye, barley, oats, sorghum, millet, and maize/corn, buckwheat and quinoa.

In a preferred embodiment, the seeds are maize/corn seeds.

In an embodiment, the seed or a plant propagation material, plant or the plant part is selected from the group consisting of wheat, rye, barley, oats, sorghum, millet, and maize/corn, buckwheat and quinoa.

In a preferred embodiment, the insecticidal combination or composition of the present invention are useful for enhancing seed germination.

In an embodiment, the insecticidal combination or composition of the present invention may be applied to the seed, plant or plant part by any conventional means known to a person skilled in the art.

In an embodiment, the combination comprising denatonium benzoate and atleast one bio-insecticide can be obtained from separate formulation sources and mixed together and used as a tank-mix, ready-to-apply, spray broth, or slurry, optionally with other pesticides, or the said combination may be obtained as a single formulation mixture such as a pre-mix, concentrate or formulated product and optionally mixed together with other insecticides, attractants, sterilants, bactericides, acaracides, nematicides, fungicides, growth regulators, herbicides, fertilizers and mixtures thereof.

In a preferred embodiment, the combinations comprising denatonium benzoate and atleast one bio-insecticide are used as a tank-mix or as successive treatments.

In a preferred embodiment, the combinations comprising denatonium benzoate and atleast one bio-insecticide are used as a seed treatment.

In an embodiment, the insecticidal compositions of the present invention may be tank mixed with agrochemically suitable excipients and applied at a locus where one or more crop is growing or where insect control is desired, or may be alternatively mixed with water, and then applied.

In an embodiment, the insecticidal compositions may be applied in a diluted or an undiluted form. The insecticidal compositions may also be applied as a ready-to-use product.

In an embodiment, the insecticidal combinations and the compositions comprising said combinations are used as foliar application, ground application, or application to plant propagation materials.

The insecticidal composition of the invention may be applied by any of the known means of applying pesticidal compounds. For example, it may be applied, formulated or unformulated, to the pests or to a locus of the pests (such as a habitat of the pests, or a growing plant liable to infestation by the pests) or to any part of the plant, including the foliage, stems, branches or roots, to the seed before it is planted or to other media in which plants are growing or are to be planted (such as soil surrounding the roots, the soil generally, paddy water or hydroponic culture systems), directly or it may be sprayed on, dusted on, applied by dipping, applied as a cream or paste formulation, applied as a vapor or applied through distribution or incorporation of a composition (such as a granular composition or a composition packed in a water-soluble bag) in soil or an aqueous environment.

Suitable application methods include inter alia soil treatment, seed treatment, in furrow application, and foliar application. Soil treatment methods include drenching the soil, drip irrigation (drip application onto the soil), dipping roots, tubers or bulbs, or soil injection. Seed treatment techniques include seed dressing, seed coating, seed dusting, seed soaking, and seed pelleting. In furrow applications typically include the steps of making a furrow in cultivated land, seeding the furrow with seeds, applying the composition to the furrow, and closing the furrow. Foliar application refers to the application of the composition to plant foliage, e.g. through spray equipment.

An embodiment provides a method of enhancing seed germination and biostimulation in a locus, a plant, or a plant part or a plant propagation material comprising contacting the locus, the plant, or the plant part or the plant propagation material with a combination comprising a denatonium compound or a salt thereof, and atleast one bio-insecticide or a composition comprising said combination.

An embodiment provides a method of enhancing seed germination and biostimulation in a plant, or a plant part or a plant propagation material comprising contacting a locus, a plant, or a plant part or a plant propagation material with a combination comprising a denatonium compound or a salt thereof, and atleast one bio-insecticide selected from orange oil, azadirachtin, eucalyptol, or mixtures thereof; or a composition comprising said combination.

An embodiment provides a method of enhancing seed germination and biostimulation in a plant, or a plant part or a plant propagation material comprising contacting a locus, a plant, or a plant part or a plant propagation material with a combination comprising a denatonium benzoate or a salt thereof, and atleast one bio-insecticide selected from orange oil, azadirachtin, eucalyptol, or mixtures thereof; or a composition comprising said combination.

In an embodiment, the biostimulation also includes increasing resistance to insect infestation. In an embodiment, said treatment with the combinations or compositions of the present invention enable enhanced seed germination in an insect infested medium.

An embodiment of the present invention provides use of combination comprising a denatonium compound or a salt thereof and atleast one bio-insecticide or a composition comprising said combination for controlling insects; protecting a seed, a plant or a plant part from damage caused by insects; and enhancing seed germination and biostimulation in a plant, or a plant part or a plant propagation material.

An embodiment of the present invention provides use of combination comprising a denatonium compound or a salt thereof, and atleast one bio-insecticide selected from orange oil, azadirachtin, eucalyptol, or mixtures thereof; or a composition comprising said combination for controlling insects; protecting a seed, a plant or a plant part from damage caused by insects; and enhancing seed germination and biostimulation in a plant, or a plant part or a plant propagation material.

In an embodiment, the present invention provides use of combination comprising denatonium benzoate, and atleast one bio-insecticide selected from orange oil, azadirachtin, eucalyptol, or mixtures thereof; or a composition comprising said combination for controlling insects; protecting a seed, a plant or a plant part from damage caused by insects; and enhancing seed germination and biostimulation in a plant, or a plant part or a plant propagation material.

An embodiment of the present invention provides use of insecticidal combination or composition comprising said combination for seed treatment.

In an embodiment, seeds treated with the combinations or compositions of the present invention also exhibit defence against insects, pests and enhanced germination.

An embodiment of the present invention also provides kit-of-parts comprising a first component comprising denatonium compound or a salt thereof, and a second component comprising atleast one bio-insecticide.

An embodiment of the present invention also provides a kit-of-parts comprising a first component comprising a denatonium compound or a salt thereof and a second component comprising a bio-insecticide selected from orange oil, azadirachtin, eucalyptol or combinations thereof.

In an embodiment, the present invention also provides a kit-of-parts comprising a first component comprising denatonium benzoate and a second component comprising a bio-insecticide selected from orange oil, azadirachtin, eucalyptol or combinations thereof. In an embodiment, the kit-of-parts comprise an additional optional component comprising an agrochemically suitable excipient. In an embodiment, the kit-of-parts comprise an additional optional component comprising an additional pesticide.

In an embodiment, the kit-of-parts may comprise a set of instructions for mixing the individual components. In an embodiment, the individual components may be mixed with each other at the time of application or before use forming a resultant combination or a composition as described in the embodiments of the present invention.

Synergistic effect refers to efficacy greater than additive effect of individual efficacies of the constituent ingredients, here denatonium benzoate and (bio-insecticide). This effectiveness of all treatments can be evaluated according to Colby's equation. In the Colby's equation given below, E is the expected efficacy of combination of denatonium benzoate and (bio-insecticide),

X is the observed efficacy of denatonium benzoate and

Y is the observed efficacy of (bio-insecticide).

Observed efficacy values i.e. X and Y are % insecticidal efficacy on larvae or % seed germination efficacy for denatonium benzoate and (bio-insecticide) respectively. If observed efficacy of combination of denatonium benzoate and (bio-insecticide) is greater than its expected efficacy, then combination is determined to be synergistic. If observed efficacy is equal to or less than expected efficacy, then combination is determined to be non- synergistic.

$$\text{Colby's equation } E = X + Y - XY/100$$

The results of synergistic effects of the present combinations/compositions is represented in examples. As used herein, all numerical values or numerical ranges include integers within such ranges and fractions of the values or the integers within ranges unless the context clearly indicates otherwise. Thus, for example, reference to a range of 90- 100%, includes 91%, 92%, 93%, 94%, 95%, 95%, 97%, etc., as well as 91.1%, 91.2%, 91.3%, 91.4%, 91.5%, etc., 92.1%, 92.2%, 92.3%, 92.4%, 92.5%, etc., and so forth.

The present invention will be further illustrated in the following examples. However, it is to be understood that these examples are for illustrative purposes only and should not be used to limit the scope of the present invention in any manner.

**Examples:**

Example 1: Efficacy of denatonium benzoate + orange oil on wireworm larvae (Agriotes sp.) mortality in sweet corn seeds

Five small pots (100 ml size) each one with one sweet corn on PEAT were used. For infestation, two wireworm larvae/ 100 ml pot were used. 1.253 g ai/kg denatonium benzoate (SL formulation) + 0.6 g ai/kg orange oil (EC formulation) were applied to sweet corn seeds for control of wireworm larvae (Agriotes sp.). Trials were conducted in four replicates. Efficacy (in %) of said combination on wireworm larvae mortality was recorded after 21 days and 35 days of sowing post first application. The observations are provided in Table 1 below.

Table 1: Efficacy of denatonium benzoate + orange oil on wireworm larvae (Agriotes sp.) mortality in sweet corn seeds

| Treatment | Application rate (g ai/kg) | Observed efficacy (%) (21 Days after sowing) | Observed efficacy (%) (35 Days after sowing) | Expected efficacy as per Colby formula (%) |
| --- | --- | --- | --- | --- |
| Untreated | - | 0 | 0 | - |
| Denatonium benzoate (SL) | 1.253 g ai/kg | 0 | 0 | - |
| Orange oil (EC) | 0.6 g ai/kg | 0 | 0 | - |
| Denatonium benzoate (SL) + Orange oil (EC) | 1.253 g ai/kg + 0.6 g ai/kg | 97.1 | 100 | 0 |

Example 2: Efficacy of denatonium benzoate + eucalyptol on wireworm larvae (Agriotes sp.) mortality in sweet corn seeds

Five small pots (100 ml size) each one with one sweet corn on PEAT were used. For infestation, two wireworm larvae/ 100 ml pot were used. 1.253 g ai/kg denatonium benzoate (SL formulation) + 1.4856 g ai/kg eucalyptol (EC formulation) were applied to sweet corn seeds for control of wireworm larvae (Agriotes sp.). Trials were conducted in four replicates. Efficacy (in %) of said combination on wireworm larvae mortality was recorded after 21 days and 35 days of sowing post first application. The observations are provided in Table 2 below.

Table 2: Efficacy of denatonium benzoate + eucalyptol on wireworm larvae (Agriotes sp.) mortality in sweet corn seeds

| Treatment | Application rate (g ai/kg) | Observed efficacy (%) (21 Days after sowing) | Observed efficacy (%) (35 Days after sowing) | Expected efficacy as per Colby formula (%) |
| --- | --- | --- | --- | --- |
| Untreated | - | 0 | 0 | - |
| Denatonium benzoate (SL) | 1.253 g ai/kg | 0 | 0 | - |
| Eucalyptol | 1.4856 g ai/kg | 0 | 0 | - |
| Denatonium benzoate (SL) + Eucalyptol | 1.253 g ai/kg + 1.4856 g ai/kg | 100 | 100 | 0 |

Example 3: Effect of denatonium benzoate + azadirachtin on enhanced corn seed germination

Five small pots (100 ml size) each one with one sweet corn on PEAT were used. For infestation, two wireworm larvae/ 100 ml pot were used. 1.253 g ai/kg denatonium benzoate (SL formulation) + 0.0261 g ai/kg azadirachtin (EC formulation) were applied to sweet corn seeds . Trials were conducted in four replicates. Effect of said combination on percentage of emerged plants was recorded after 14 days of sowing post first application. The observations are provided in Table 3 below.

Table 3: Effect of denatonium benzoate + azadirachtin on enhanced corn seed germination

| Treatment | Application rate (g ai/kg) | Emerged plants (%) | Emergence efficacy % | Expected Emergence efficacy % by Colby's formula | Conclusion |
|---|---|---|---|---|---|
| Untreated (infected) | - | 60 | 0 | - | - |
| Denatonium benzoate (SL) | 1.253 g ai/kg | 70 | 16.66 | - | - |
| Azadirachtin (EC) | 0.0261 g ai/kg | 75 | 25 | - | - |
| Denatonium benzoate (SL) + Azadirachtin (EC) | 1.253 g ai/kg + 0.0261 g ai/kg | 85 | 42 | 37.75 | unexpected |

Denatonium benzoate in combination with other bio-insecticide shows synergistic control of wireworms as observed from Table 1 and 2. From table 3, it is evident that combination of denatonium benzoate with other insecticidal agents also show enhanced germination of treated seeds in infected medium. It is found that the present combinations are more effective in killing wireworms rather than using bio-insecticides alone, as well as for enhancing germination and biostimulant properties despite insect infestation. It is clearly observed that denatonium benzoate alone does not exhibit any insecticidal activity; however, a combination of denatonium benzoate with other bio-insecticides results in a synergistic insecticidal activity and biostimulant activity.

It is to be understood that the present invention is susceptible to modifications, changes and adaptations by those skilled in the art. Such modifications, changes, adaptations are intended to be within the scope of the present invention.

While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above-described embodiments, methods, and examples, but by all embodiments and methods within the scope and spirit of the invention.

**Claims**

1. An insecticidal combination comprising: a denatonium compound or a salt thereof; and atleast one bio-insecticide.

2. The insecticidal combination of claim 1, wherein the denatonium compound is selected from the group consisting of denatonium chloride, denatonium citrate, denatonium saccharide, denatonium carbonate, denatonium acetate, denatonium benzoate, denatonium benzoate monohydrate, denatonium capsaicinate, and mixtures thereof.

3. The insecticidal combination of claim 1, wherein the denatonium compound or a salt thereof is denatonium benzoate.

4. The insecticidal combination of claim 1, wherein said bio-insecticide is selected from orange oil, azadirachtin, eucalyptol, or combinations thereof.

5. The insecticidal combination of claim 1, wherein the denatonium compound or a salt thereof; and atleast one bio-insecticide is combined in the weight ratio ranging from about 100:1 to 1:100.

6. The insecticidal combination of claim 1, wherein the denatonium benzoate and orange oil are combined in the weight ratio ranging from about 100:1 to 1:100, preferably in the weight ratio ranging from about 25:1 to 1:25, more preferably in the weight ratio ranging from about 2.08:1 to 1:0.48.

7. The insecticidal combination of claim 1, wherein the denatonium benzoate and azadirachtin are combined in the weight ratio ranging from about 100:1 to 1:100, preferably in the weight ratio ranging from about 75:1 to 1:75, more preferably in the weight ratio ranging from about 47.89:1 to 1:0.02.

8. The insecticidal combination of claim 1, wherein the denatonium benzoate and eucalyptol are combined in the weight ratio ranging from about 100:1 to 1:100, preferably in the weight ratio ranging from about 50:1 to 1:50, more preferably in the weight ratio ranging from about 0.84:1 to 1:1.19.

9. An insecticidal composition comprising the combination as claimed in claim 1, wherein said composition further comprising an agrochemically suitable excipient.

10. A method of controlling insects at a locus comprising, contacting said insects or said locus with an insecticidal combination comprising a denatonium compound or a salt thereof, and atleast one bio-insecticide or a composition comprising said combination.

11. The method of claim 10, wherein the insecticidal combinations and the compositions comprising said combinations are used as foliar application, ground application, or application to plant propagation materials.

12. The method of claim 10, wherein the insects comprising insects of Coleoptera order, preferably of Agriotes genus.

13. The method of claim 10, wherein the insects are wireworms or elaters or snapping beetles or spring beetles or skipjacks.

14. A method of protecting a seed or a plant propagation material, a plant or a plant part, said method comprising contacting the seed or the plant propagation material, the plant or the plant part with a combination comprising a denatonium compound or a salt thereof and atleast one bio-insecticide or with a composition comprising said combination.

15. The method of claim 14, wherein the seed or a plant propagation material, plant or the plant part is selected from the group consisting of wheat, rye, barley, oats, sorghum, millet, and maize/corn, buckwheat and quinoa.

16. The method of claim 14, wherein said denatonium compound or a salt thereof is applied at a dose rate of about 0.1 g ai/kg seed to 50 g ai/kg seed, preferably at a dose rate of about 1 g ai/kg seed to 10 g ai/kg seed, more preferably at a dose rate of about 1.253 g ai/kg seed.

17. The method of claim 14, wherein the bio-insecticide is applied at a dose rate of about 0.01 g ai/kg seed to about 50 g ai/kg seed, preferably at a dose rate of about 1 g ai/kg seed to 10 g ai/kg seed, or preferably at a dose rate of about 0.4 g ai/kg seed to 5 g ai/kg seed, or preferably at a dose rate of about 0.01 g ai/kg seed to 1 g ai/kg seed.

18. A method of enhancing seed germination and biostimulation in a locus, a plant, or a plant part or the plant propagation material comprising contacting the locus, the plant, or the plant part or a plant propagation material with a combination as claimed in claim 1 or a composition comprising said combination.

19. Use of combination as claimed in claim 1 or a composition comprising said combination for controlling insects; protecting a seed, a plant or a plant part from damage caused by insects; and enhancing seed germination and biostimulation in a plant, or a plant part or a plant propagation material.

20. A kit-of-parts comprising a first component comprising denatonium compound or a salt thereof, and a second component comprising atleast one bio-insecticide.

Europäisches
Patentamt

European
Patent Office

Office européen
des brevets

# EUROPEAN SEARCH REPORT

**Application Number**

EP 25 19 4867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/183425 A1 (UPL LTD [IN]) 17 September 2020 (2020-09-17)<br><br>* page 9, line 4 - page 16, line 32 *<br>* page 15, line 1 *<br>* claims 1-10 * | 1-5,7, 9-12, 14-17, 19,20 | INV.<br>A01N33/12<br>A01P7/04<br>A01N43/90<br>A01N65/36 |
| X | WO 2022/243407 A1 (KWS SAAT SE & CO KGAA [DE]) 24 November 2022 (2022-11-24)<br>* claims 4, 6-8, 12, 14 *<br>* page 10, last paragraph - page 11, paragraph 3 *<br>* page 7, paragraph 3 - page 8, paragraph 3 *<br>* page 8, paragraph 4 - page 9, paragraph 2 *<br>* page 13, paragraph 4 * | 1-3,5, 9-20 | |
| X | WO 2016/174686 A1 (NICHEM SOLUTIONS [IN]) 3 November 2016 (2016-11-03)<br><br>* claims 1-3, 8 *<br>* page 4, paragraph 1 * | 1-5,7, 9-17,19, 20 | **TECHNICAL FIELDS SEARCHED (IPC)**<br><br>A01N |
| X | US 2010/158987 A1 (LEHRKE INGO [DE]) 24 June 2010 (2010-06-24)<br>* claims 12, 13 *<br>* tables 1-3 * | 1-5,8,9 | |

The present search report has been drawn up for all claims

| Place of search | Date of completion of the search | Examiner |
|---|---|---|
| Munich | 10 November 2025 | Marie, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 4867

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2025

| Patent document cited in search report | Publication date | Patent family member(s) | Publication date |
|---|---|---|---|
| WO 2020183425 A1 | 17-09-2020 | BR 112021015982 A2 | 05-10-2021 |
| | | CA 3132929 A1 | 17-09-2020 |
| | | EP 3937635 A1 | 19-01-2022 |
| | | MY 207896 A | 27-03-2025 |
| | | SG 11202109418Q A | 29-09-2021 |
| | | US 2022046919 A1 | 17-02-2022 |
| | | WO 2020183425 A1 | 17-09-2020 |
| WO 2022243407 A1 | 24-11-2022 | AR 125892 A1 | 23-08-2023 |
| | | BR 112023023938 A2 | 30-01-2024 |
| | | CA 3219534 A1 | 24-11-2022 |
| | | CL 2023003401 A1 | 21-06-2024 |
| | | EP 4091448 A1 | 23-11-2022 |
| | | EP 4340615 A1 | 27-03-2024 |
| | | US 2024251794 A1 | 01-08-2024 |
| | | WO 2022243407 A1 | 24-11-2022 |
| WO 2016174686 A1 | 03-11-2016 | NONE | |
| US 2010158987 A1 | 24-06-2010 | BR PI0718388 A2 | 26-11-2013 |
| | | CA 2666077 A1 | 24-04-2008 |
| | | CN 101553205 A | 07-10-2009 |
| | | EP 2083794 A2 | 05-08-2009 |
| | | RU 2009118410 A | 27-11-2010 |
| | | RU 2013158767 A | 10-07-2015 |
| | | UA 99820 C2 | 10-10-2012 |
| | | US 2010158987 A1 | 24-06-2010 |
| | | US 2013259918 A1 | 03-10-2013 |
| | | US 2015086609 A1 | 26-03-2015 |
| | | WO 2008046603 A2 | 24-04-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R.PEERA MALLAWA ; T.M.DAYANI ; ARMSTRONG, G ; NAYLOR, R.E. L**. Antifeedant effects of denatonium benzoate and a neem derivative on Myzus persicae (Sulzer).. *Tropical agricultural research*, 1995, vol. 7, 39-47